# EUROPEAN PATENT SPECIFICATION

(11) **EP 0 865 651 B1**
(45) Date of publication and mention of the grant of the patent: **09.01.2002**
(21) Application number: 97927323.2
(22) Date of filing: 04.07.1997
(51) Int. Cl.: G10L 15/14, G10L 15/06

(54) **METHOD OF AND SYSTEM FOR RECOGNIZING A SPOKEN TEXT**
VERFAHREN UND SYSTEM ZUR ERKENNUNG EINES GESPROCHENEN TEXTES
PROCEDE ET DISPOSITIF DE RECONNAISSANCE D'UN TEXTE PARLE

(30) Priority: 27.09.1996 EP 96890151
(43) Date of publication of application: 23.09.1998
(73) Proprietor: Koninklijke Philips Electronics N.V., 5621 BA Eindhoven (NL)
(72) Inventor: BARTOSIK, Heinrich, NL-5656 AA Eindhoven (NL)
(74) Representative: Weber, Helmut
(86) International application number: PCT/IB97/00833
(87) International publication number: WO 98/13822

(56) References cited:
- EP-A- 0 686 965
- WO-A-97/17694
- US-A- 5 031 113
- US-A- 5 251 283

## Description

The invention relates to a method of recognizing a spoken text, in which method the spoken text uttered by a speaker is converted into first digital data and in which method the first digital data which represent the spoken text, are subjected to a speech recognition process, in which process allowance is made for available lexicon data which represent a lexicon, available language model data which represent a language model, and available reference data which represent phonemes, and in which process second digital data which represent a recognized text are generated, and in which method the recognized text is displayed with the aid of the second digital data, and in which method third digital data are generated to correct the recognized text represented by the second digital data and a part of the second digital data are replaced by the third digital data, and as a result of this, fourth digital data which represent a corrected text, are obtained and in which method adaptation data for adapting the available reference data to the speaker of the spoken text are generated with the aid of the first digital data and the fourth digital data, and in which method the available reference data are adapted to the speaker of the spoken text with the aid of the adaptation data and the first digital data so as to obtain adapted reference data.

The invention further relates to a system for recognizing a spoken text, comprising a conversion device by means of which the spoken text uttered by a speaker can be converted into first digital data which represent the spoken text, and comprising a lexicon data device for available lexicon data which represent a lexicon and which can be stored in the lexicon data device, and comprising a language model data device for available language model data which represent a language model and which can be stored in the language model data device, and comprising a reference data device for available reference data which represent phonemes and which can be stored in the reference data device, and comprising a speech recognition device,with which the lexicon data device, the language model data device and the reference data device can be made to cooperate, and to which the first digital data can be applied and which is adapted to supply second digital data which represent a recognized text and which are generated during a speech recognition process carried out on the basis of the first digital data, and comprising a display device to which the second digital data can be applied in order to display the recognized text, and comprising an error correction device by means of which, for the correction of the text represented by the second digital data, third digital data can be entered and a part of the second digital data can be replaced by the third digital data, thereby enabling fourth digital data, which represent a corrected text, to be generated, and comprising adaptation means to which the first digital data and the fourth digital data can be applied and by means of which adaptation data for adapting the available reference data to the speaker of the spoken text can be generated, which adaptation data and first digital data can be applied to the reference data device to adapt the available reference data to the speaker of the spoken text and the reference data adapted to the speaker of the spoken text can be stored in the reference data device.

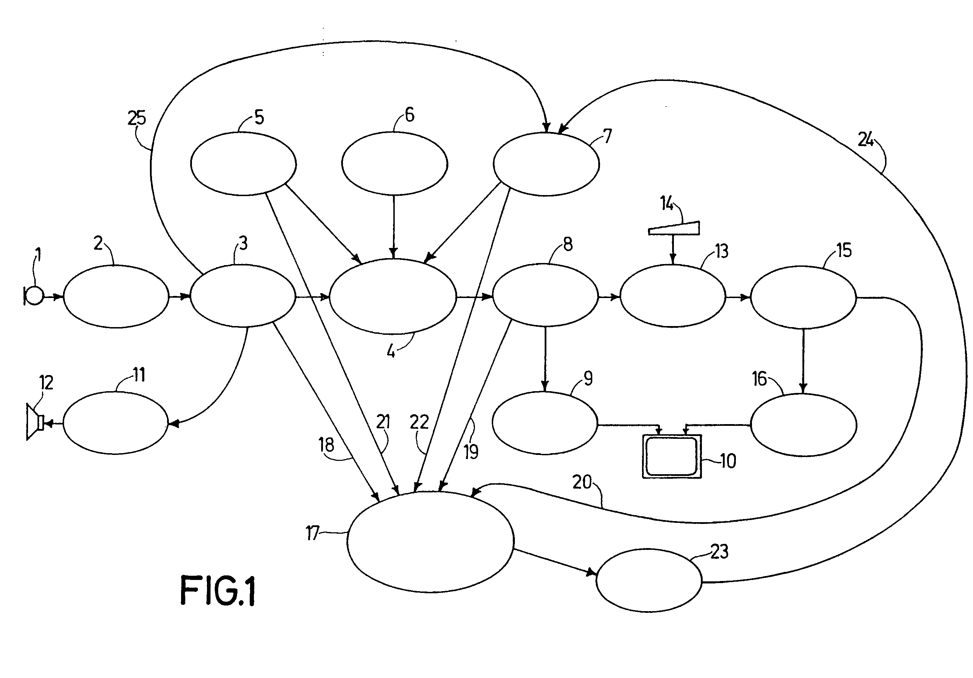

A method of the type defined in the opening paragraph and a system of the type defined in the second paragraph are known from e.g. EP-A-686965, and also from a so-termed speech recognition system which is commercially available from the Applicant under the type designation SP 6000. This known method will be described hereinafter with reference to Figure 1. In Figure 1 the various steps of the methods which are relevant in the present context are represented diagrammatically as blocks.

In the known method of recognizing a spoken text, which is spoken into a microphone, shown diagrammatically in Figure 1, by a speaker, the spoken text in the form of analog electric signals supplied by the microphone 1 is converted, in the block 2, into first digital data by means of an analog-to-digital conversion process performed by an analog-to-digital converter. The resulting digital data representing the spoken text are stored in a memory in the block 3.

Moreover, the first digital data representing the spoken text are subjected to a speech recognition process performed by a speech recognition device in the block 4. In this speech recognition process processing is effected on the basis of lexicon data representing a lexicon and available in a lexicon data device in the block 5, language model data representing a language model and available in a language model data device in the block 6, and reference data representing phonemes and available in a reference data device in the block 7. In this respect, it is to be noted that the lexicon data represent not only words of a lexicon but also the phoneme sequences associated with the words, i.e. the phonetic script. With respect to the language model data it is to be noted that these are data representing the frequency of occurrence of words as well as the frequency of occurrence of given sequences of words in texts. With respect to the reference data it is to be noted that these data represent reference patterns for phonemes, i.e. for a given number of phonemes, which are pronounced differently by different speakers in a speaker-specific manner, as a result of which there are a multitude of speaker-specific reference patterns, which form a speaker-specific reference data set for each phoneme. With respect to the reference data sets it is to be noted that the quality of a speech recognition process improves according as the reference data sets, i.e. the reference patterns contained therein, are better adapted to a speaker. For this reason, the known method also effects an adaptation of the reference data to each speaker, as will be explained hereinafter. With respect to this adaptation of the reference data it is to be noted also, as a matter of principle, that this adaptation performs better according as a corrected text, obtained by correction of a recognized text, better matches a spoken text.

As regards the speech recognition process effected in the block 4, it is stated briefly that in such a speech recognition process phonemes and phoneme sequences are recognized on the basis of the first digital signals representing the spoken text with the aid of the reference data representing the phonemes and, finally, words and word sequences are recognized on the basis of the recognized phonemes and phoneme sequences and with the aid of the lexicon data and the language model data.

In the afore-described speech recognition process as carried out in the block 4 second digital data are generated, which represent a recognized text. These second digital data are loaded into a memory in the block 8.

In the block 9 the recognized text is displayed on a display device 10 with the aid of the second digital data. The display device is preferably a monitor, shown diagrammatically in Figure 1. The purpose of displaying the recognized text is to give a speaker or user, such as a typist, the opportunity to check the recognized text and to correct errors in the recognized text, at option on the basis of an error detection in the speech recognition process.

In order to enable the recognized text to be checked in a simple manner the first digital data representing the spoken text stored in a memory are re-converted into analog electric signals in a digital-to-analog conversion process performed by a digital-to-analog converter in the block 11, which signals are subsequently applied to a loudspeaker 12, shown diagrammatically in Figure 1, for acoustic reproduction of the spoken text. By listening to the acoustically reproduced spoken text and by reading the displayed recognized text the recognized text can be checked very simply for exactness or errors.

When the user detects an error in the recognized text on the basis of an error detection in the speech recognition process in the block 4, the user can carry out a correction process by means of an error correction device in the block 13, in that by means of a keyboard 14 shown diagrammatically in Figure 1 the user generates third digital data for the correction of the recognized text represented by the second digital data, the second digital data thus being partly replaced by the third digital data in order to correct the recognized text in the block 13, i.e. text portions, words or letters recognized as being incorrect by the user are replaced by the correct text portions, words or letters entered by means of the keyboard 14. This partial replacement of the second digital data by the entered third digital data results in fourth digital data representing a corrected text. The fourth digital data representing the corrected text are loaded into a memory in the block 15. The stored fourth digital data are displayed in the block 16, which is also effected on the display device 10, as shown diagrammatically in Figure 1. This concludes the actual speech recognition process in the known method.

However, as already stated hereinbefore, it is very effective in such a speech recognition process to adapt the reference data available in a reference data device in the block 7 to the relevant speaker, as a result of which an improved recognition quality is obtained during a subsequent speech recognition process of a further spoken text. In order to effect such an adaptation of the available reference data in the known method, adaptation data for the adaptation of the available reference data to the speaker of the spoken text are generated with the aid of the first digital data and the fourth digital data, and the available reference data representing the phonemes are adapted to the speaker of the spoken text with the aid of the generated adaptation data and the first digital data, so that reference data adapted to the speaker of the spoken text are obtained. To generate said adaptation data the known method carries out a verification process by means of a verification device in the block 17. To carry out this verification process the verification device receives the first digital data representing the spoken text, as is indicated by the arrow 18, the second digital data representing the recognized text, as is indicated by the arrow 19, the fourth digital data representing the corrected text, as is indicated by the arrow 20, the lexicon data, as is indicated by the arrow 21, and the reference data, as is indicated by the arrow 22. With the aid of all the data applied to it, using complex heuristic methods in the verification process in the block 17, in which inter alia a new speech recognition process is carried out, the verification device determines those text parts in the corrected text which form the best match with the corresponding text parts in the spoken text, which is effected on the basis of the text recognized by means of the speech recognition device during the speech recognition process of a spoken text in the block 4, taking into account the corrected text subsequently obtained by correction. These best matching text parts of the spoken text and the corrected text are represented by digital data, which form the afore-mentioned adaptation data. These adaptation data are loaded into a memory in the block 23.

Furthermore, the adaptation data stored in a memory in the block 23 and the first digital data stored in a memory in the block 3 are used to adapt the reference data stored in the reference data device in the block 7, as is indicated by the arrows 24 and 25. As a result of this adaptation, the reference data, i.e. the reference patterns for the various phonemes, are better adapted to a speaker, which leads to a better recognition quality during a subsequent speech recognition process of a subsequently uttered text.

As is apparent from the above description of the known method, the known speech recognition system having the type designation SP 6000 comprises a separate verification device forming the adaptation means for generating adaptation data by means of which the reference data available in the reference data device can be adapted to a speaker of a spoken text with the aid of the first digital data. The first digital data, the second digital data, the fourth digital data, the lexicon data and the reference data are applied to this verification device. With the aid of all the data applied to it, using complex heuristic methods in a verification process in which, as already stated, also a new speech recognition process is carried out, the verification device determines those text parts in the corrected text which form the best match with the corresponding text parts in the spoken text, taking into account the corrected text, and the verification device generates the adaptation data corresponding to the best matching text parts thus determined. The verification device of the known speech recognition system is very intricate and complex, which is mainly caused by the fact that a large amount of data is to be processed and analyzed by means of intricate heuristic methods. Moreover, the verification cycles of a verification process in the verification device are very complicated, requiring comparatively long processing times, which is unfavorable. Besides, it has been found that in spite of the provision of the complex verification device in the known speech recognition system the adaptation of the reference data to a speaker of a spoken text proceeds comparatively slowly in some cases, namely in those cases in which, for example owing to unsatisfactorily adapted reference data during a verification process, only a comparatively incorrect speech recognition process occurs, because then a comparatively large text part is extracted by the verification device owing to the error content and, consequently, only a comparatively small text part is available to serve as adaptation data for adapting the reference data. This leads to the problem that in the case of comparatively poorly adapted reference data and, as a consequence, a substantial need for a rapid and effective adaptation of the reference data, this need cannot be satisfied.

It is an object of the invention to preclude the afore-mentioned problems and to improve a method of the type defined in the opening paragraph as well as a system of the type defined in the second paragraph in a simple manner, in order to achieve that the adaptation of reference data to the speaker of a spoken text can be effected at minimal cost yet comparatively rapidly and satisfactorily.

In order to achieve this object, a method of the type defined in the opening paragraph is characterized in that, according to the invention, both the available lexicon data and the available language model data are adapted to the speaker of the spoken text by means of the fourth digital data after obtaining of the fourth digital data which represent the corrected text, and subsequently the first digital data which represent the spoken text are again subjected to a speech recognition process in which allowance is made for the adapted lexicon data, the adapted language model data and the available reference data, and in which fifth digital data which represent a newly recognized text are generated, and the fifth digital data are used as adaptation data and are used in conjunction with the first digital data in order to adapt the available reference data to the speaker of the spoken text.

Moreover, in order to achieve this object, a system of the type defined in the second paragraph is characterized, according to the invention, in that the adaptation means are formed by the speech recognition device, the lexicon data device and the language model data device, and the fourth digital data can be applied to the lexicon data device and the language model data device to adapt the available lexicon data and the available language model data to the speaker of the spoken text, and by means of the speech recognition device fifth digital data which represent a newly recognized text can be generated during a new speech recognition process carried out on the basis of the first digital data after the adaptation of the lexicon data and the language model data, and the fifth digital data, used as adaptation data, together with the first digital data can be applied to the reference data device in order to adapt the available reference data to the speaker of the spoken text.

By means of the measures in accordance with the invention it is achieved that the adaptation means for the generation of adaptation data by means of which the reference data available in the reference data device can be adapted to the speaker of a spoken text, are formed by means which are present anyway, i.e. by the speech recognition device, the lexicon data device and the language model data device, as a result of which no separate means - such as a verification device - are required, which is advantageous for simple and low-cost implementation. Adapting the reference data to the speaker of a spoken text with the aid of adaptation data in the form of fifth digital data representing a newly recognized text has the advantage that the adaptation of the reference data can proceed comparatively rapidly and very effectively, which is because in the case of a text newly recognized by means of the speech recognition device it may be assumed that most of the newly recognized text very well matches with the spoken text and, as a consequence, the adaptation of the reference data on the basis of the fifth digital data representing the newly recognized text and the first digital data representing the spoken text can be effected particularly rapidly and effectively.

In a system in accordance with the invention it has proved to be particularly advantageous if the system is implemented by means of a personal computer. This is very advantageous in view of an implementation which is as cheap as possible.

The afore-mentioned as well as further aspects of the invention will be apparent from the exemplary embodiment described hereinafter and will be elucidated on the basis of this exemplary embodiment.

The invention will now be described in more detail with reference to the drawings, which shows an exemplary embodiment to which the invention is not limited.

Figure 1 shows diagrammatically by means of blocks a prior-art method of recognizing a spoken text.

Figure 2, in the same way as Figure 1, shows a method of recognizing a spoken text in accordance with the invention.

Fig. 3 is a block-schematic diagram showing a system for recognizing a spoken text in accordance with the invention, in which reference data representing phonemes can be adapted rapidly and effectively.

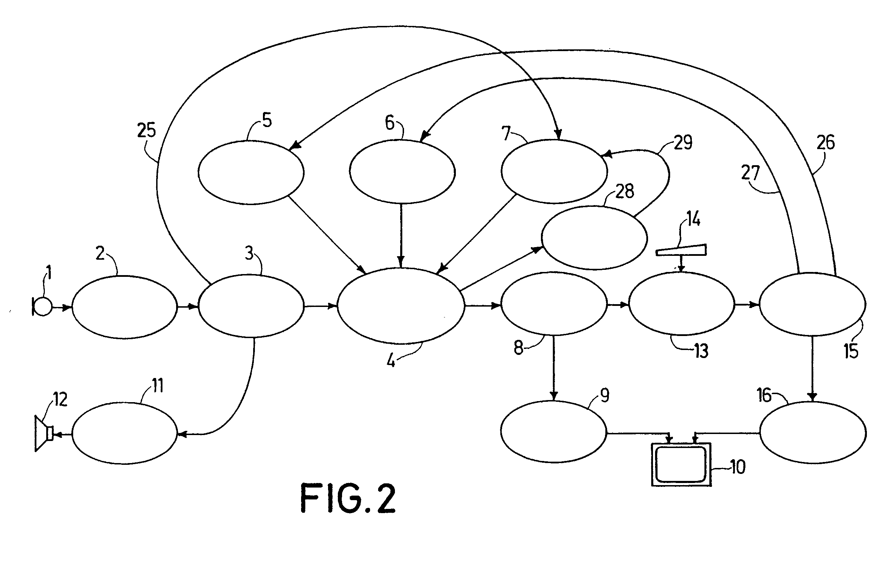

A method in accordance with the invention for recognizing a spoken text will be described hereinafter with reference to Figure 2. In Figure 2, in the same way as in Figure 1, those steps of the method which are relevant in the present context are shown diagrammatically as blocks. Some steps of the method in accordance with the invention are at least substantially similar to steps of the prior-art method described with reference to Figure 1, for which reason these steps of the method are described only briefly.

In the method in accordance with the invention a speaker speaks a text into a microphone 1, which supplies the analog electric signal. In the block 2 the spoken text supplied in the form of analog electric signals is converted into first digital data in an analog-to-digital conversion process performed by means of an analog-to-digital converter, which digital data represent the spoken text and are loaded into a memory in the block 3.

Furthermore, the first digital data representing the spoken text are subjected to a speech recognition process performed by a speech recognition device in the block 4. In the same way as in the known method this speech recognition process processing in the method in accordance with the invention is also effected on the basis of lexicon data representing a lexicon and available in a lexicon data device in the block 5, language model data representing a language model and available in a language model data device in the block 6, and reference data representing phonemes and available in a reference data device in the block 7. In the same way as in the known method in accordance with Figure 1, second digital data are generated, which represent a recognized text during the speech recognition process carried out in the block 4 in the method in accordance with the invention. The second digital data are loaded into a memory in the block 8.

In a first operating mode of the method in accordance with the invention the entire spoken text of the block 3 can be stored in a memory and cannot be subjected to a speech recognition process in the block 4 until it has been stored. In a second operating mode, however, spoken text can alternatively be subjected continuously to a speech recognition process in accordance with the block 4 while this text is spoken.

In the block 9 the recognized text is displayed on a display device 10, i.e. a monitor, with the aid of the second digital data. By displaying the recognized text a speaker or user, such as a typist, is given the opportunity to check the recognized text and to correct errors in the recognized text, at option on the basis of an error detection in the speech recognition process.

In order to enable the recognized text to be checked in a simple manner the first digital data representing the spoken text stored in a memory in the block 3 are re-converted into analog electric signals in a digital-to-analog conversion process performed by a digital-to-analog converter in the block 11, which signals are subsequently applied to a loudspeaker 12 for acoustic reproduction of the spoken text. By listening to the acoustically reproduced spoken text and by reading the displayed recognized text the recognized text can be checked very simply for exactness or errors.

If in the method in accordance with the invention a continuous recognition of the spoken text is effected in said second operating mode, during which a spoken text is recognized and displayed continuously, the recognized text can be checked by continuously reading the displayed recognized text.

When the user detects an error in the recognized text on the basis of an error detection in the speech recognition process in the block 4, the user can carry out a correction process by means of an error correction device in the block 13, in that the user generates third digital data by means of a keyboard 14, the second digital data thus being partly replaced by the third digital data in order to correct the recognized text in the block 13. This partial replacement of the second digital data by the entered third digital data results in fourth digital data representing a corrected text. The fourth digital data representing the corrected text are loaded into a memory in the block 15. The stored fourth digital data are displayed in the block 16, which is also effected on the display device 10. This concludes the actual speech recognition process in the method in accordance with the invention.

However, as already stated in the description of the known method in accordance with Figure 1, it also is very effective in the speech recognition method in accordance with the invention described with reference to Figure 2 to adapt the reference data available in a reference data device in the block 7 to the relevant speaker, as a result of which an improved recognition quality is obtained during a subsequent speech recognition process of a further spoken text. In order to effect such an adaptation of the available reference data in the method in accordance with the invention, the following steps in the method in accordance with the invention are carried out in an advantageous manner using means which are present anyway.

After the fourth digital data representing the corrected text and stored in a memory in the block 15 has been received as indicated by the arrows 26 and 27, both the lexicon data available in a lexicon data device in the block 5 and the language model data available in a language model data block in the block 6 are adapted to the speaker with the aid of the fourth digital data.

After this adaptation of the lexicon data and the language model data the first digital data representing the spoken text and stored in a memory in the block 3 are again subjected to a speech recognition process. performed by means of the speech recognition device in the block 4. This speech recognition process utilizes the adapted lexicon data, the adapted language model data and the reference data that have not yet been adapted. In the new speech recognition process performed in the block 4 fifth digital data are generated, which represent a newly recognized text. The fifth digital data are stored in a memory in the block 28.

Furthermore, the method in accordance with the invention uses the fifth digital data representing the newly recognized text and stored in a memory in the block 28 as adaptation data. The fifth digital data used as adaptation data and the first digital data stored in a memory in the block 3 are applied to the reference data device as indicated by the arrows 29 and 25 in the block 7 to adapt the reference data stored in the reference data device to the speaker of the spoken text. As a result of this adaptation the reference data, i.e. the reference patterns for the various phonemes, are better adapted to the speaker of the spoken text, which leads to a better recognition quality during a subsequent speech recognition process of a spoken text subsequently uttered by the speaker.

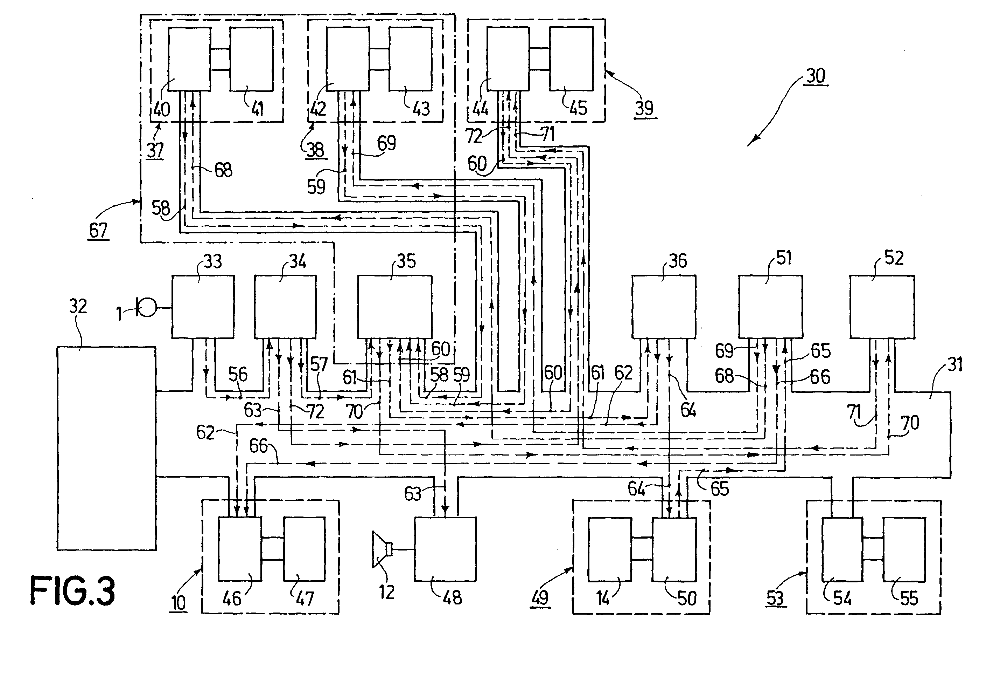

A system in accordance with the invention for recognizing a spoken text will now be described with reference to Figure 3, by means of which system the speech recognition method explained with reference to Figure 2 can be carried out.

Figure 3 shows a system 30 in accordance with the invention which has been implemented by means of a personal computer. The system 30 includes a bus 31 which, in known manner, comprises a predetermined number of address lines, a predetermined number of data lines and a predetermined number of control lines. The bus 31 serves for connecting the various units of the system 30 and to provide a data transfer between the various units of the system 30. A central control unit 32 of the system 30 is connected to the bus 31. By means of the central control unit 32 a program can be run to control the various processes in the system 30. One of the essential functions of the central control unit 32 is to control the data transfer between the individual units of the system 30. In Figure 3 this data transfer is represented diagrammatically in broken lines having arrowheads to indicate the directions.

The system 30 comprises a first speech signal conversion device 33, which comprises an analog-to-digital converter and by means of which the analog electric signals corresponding to a spoken text and supplied by the microphone 1 can be converted into first digital data. To store the first digital data the system 30 comprises a memory device 34 connected to the bus 31.

The system 30 further comprises a speech recognition device 35 connected to the bus 31. In a first operating mode of the system 30 the first digital data stored in the first memory device 34 and in a second operating mode of the system 30 the first digital data supplied by the speech signal conversion device 33 can be applied directly to the speech recognition device 35. The speech recognition device 35 is adapted to supply second digital data representing a recognized text and generated in a first speech recognition process on the basis of the first digital data. To store the second digital data the system 30 comprises a second memory device 36 connected to the bus 31.

When the speech recognition device of the system 30 performs a speech recognition process utilizes lexicon data available in the system 30, representing a lexicon and language model data available in the system 30 and representing a language model, and reference data available in the system 30 and representing phonemes. For this purpose, the system 30 comprises a lexicon data device 37 connected to the bus 31, a language model data device 38 connected to the bus 31, and a reference data device 39 connected to the bus 31. The lexicon data device 37 comprises a first data processing unit 40, which is connected to the bus 31, and a lexicon data memory device 41, which is connected to the first data processing unit 40 via the bus 31, which is shown only symbolically in Figure 3. The language model data device 38 comprises a second data processing unit 42, which is connected to the bus 31, and a language model data memory device 43, which is connected to the data processing unit 42 via the bus 31. The reference data device 39 comprises a third data processing unit 44, which is connected to the bus 31, and a reference data memory device 45, which is connected to the third data processing unit 44 via the bus 31.

The system 30 as shown in Figure 3 further has a display device 10 connected to the bus 31. The display device 10 comprises a display driver 46, which is connected to the bus 31, and display means 47, which are connected to the display driver 46 via the bus 31 and by means of which a text to be read can be displayed.

The system 30 further has a second speech signal conversion device 48 connected to the bus 31. The second speech signal conversion device 48 basically comprises a digital-to-analog converter. By means of the second speech signal conversion device 48 the first digital data representing the spoken text and stored in the first memory device 34 can be reconverted into analog electric signals, which can be applied to the loudspeaker 12, which is connected to the speech signal conversion device 48, for the acoustic reproduction of the spoken text.

The system 30 further has an error correction device 49 connected to the bus 31. The error correction device 49 comprises a correction device 50, which is connected to the bus 31, and a correction input device, which is formed by a keyboard 14 and which is connected to the correction device 50 via the bus 31. By means of the error correction device 49, i.e. by means of the keyboard 14, third digital data can be entered, in order to correct the recognized text represented by the second digital data stored in the second memory device 36, and a part of the second digital data can be replaced by the third digital data, thus enabling fourth digital data to be generated by means of the correction device 50. The fourth digital data generated by means of the correction device 50 represent a corrected text.

To store the fourth digital data representing a corrected text the system 30 has a third memory device 51 connected to the bus 31.

The system 30 further has a fourth memory device 52 connected to the bus 31, which memory device serves to store fifth digital data representing a newly recognized text. The generation of these fifth digital data will be described in detail hereinafter.

The system 30 further has a printing device 53 connected to the bus 31. The printing device 53 comprises a printer control device 54, which is connected to the bus 31, and a printer 55, which is connected to the printer control device 54 via the bus 31.

In the foregoing the individual units of the system 30 have been described. Hereinafter, some processes in the system 30 which are important in the present context, will be explained. In this respect it is to be noted once more that a data transfer, as represented by a broken line in Figure 3, should be effected from one unit to another unit of the system 30. In this context it is to be borne in mind that, in fact, such a data transfer is not effected directly from one unit of the system 30 to another unit of the system 30, as indicated by the relevant line, but practically always proceeds via the central control unit 32 of the system 30, which is not shown in Figure 3 for the clarity of the drawing.

When a user of the system 30, i.e. a speaker, speaks a text of a given length, for example a length of a few minutes, into the microphone 1 the spoken text is applied from the microphone 1 to the first speech signal conversion device 33 in the form of analog electric signals, the spoken text being converted into first digital data in an analog-to-digital conversion process by means of the analog-to-digital converter in the first speech signal conversion device 33. Under control of the central control unit 32 the first digital data generated by means of the first speech signal conversion device 33 in the afore-mentioned first operating mode are transferred to the first memory device 34 and stored in the first memory device 34 via the bus 31 as indicated by the broken line 56.

The first digital data stored in the first memory device 34 can be applied from this memory device to the speech recognition device 35, as indicated by the broken line 57, via the bus 31 under control of the central control unit 32. In the previously mentioned second operating mode this application of the first digital data to the speech recognition device 35 can be effected simultaneously with the storage of the first digital data in the first memory device 34 but in the first operating mode it can also be effected upon completion of the storage of the first digital data corresponding to a spoken text of a given length in the first memory device 34.

In the speech recognition device 35 the first digital data are subjected to a speech recognition process. During this speech recognition process lexicon data, representing a lexicon and stored in the lexicon data memory device 41 of the lexicon data device 37, are applied to the speech recognition device 35 by means of the first data processing unit 40 of the lexicon data device 37 via the bus 31, as indicated by the broken line 58, in order to be used in this speech recognition process. Moreover, during this speech recognition process language model data representing a language model and stored in the language model data memory device 43 of the language model data device 38 are applied to the speech recognition device 35 by means of the second data processing unit 42 via the bus 31, as indicated by the broken line 59, in order to be used in this speech recognition process. Furthermore, during this speech recognition process reference data representing phonemes and stored in the reference data memory device 45 of the reference data device 39 are applied to the speech recognition device 35 via the third data processing unit 44 of the reference data device 39, as indicated by the broken line 60, in order to be used in this speech recognition process.

During the speech recognition process carried out by means of the speech recognition device 35 phonemes and phoneme sequences are recognized on the basis of the first digital data representing the spoken text with the aid of the reference data representing the phonemes and, finally, words and word sequences are recognized with the aid of the recognized phonemes and phoneme sequences and with the aid of the lexicon data and the language model data. The implementation of such speech recognition processes is a technology which is known per se and which is not described any further hereinafter. Second digital data representing a recognized text are generated during the speech recognition device process carried out by means of the speech recognition device 35. Under control of the central control unit 32 the second digital data generated by means of the speech recognition device 35 are applied to the second memory device 36 and stored in the memory device 36 via the bus 31.

The second digital data stored in the second memory device 36 are applied to the display device 10 as indicated by the broken line 62 also under control of the central control unit 32. In the display device 10 the applied second digital data are processed by means of the display driver 46, after which the recognized text is displayed by the display device 10, i.e. its display means 47, using the second digital data. As a result of the display of the recognized text a user can check the recognized text in order to correct errors in the recognized text, at option on the basis of an error detection in the speech recognition process.

In order to enable the recognized text to be checked in a simple manner the first digital data representing the spoken text stored in the first memory device 34 can be transferred to the second speech signal conversion device 48 under control of the central control unit 32 via the bus 31 as indicated by the broken line 63. In the second speech signal conversion device 48 the applied first digital data are converted into analog electric signals by means of the digital-to-analog converter in the second speech signal conversion device 48, which signals are subsequently applied to the loudspeaker 12 for acoustic reproduction of the spoken text. By listening to the acoustically reproduced spoken text and by reading the displayed recognized text and reading the displayed recognized text, the recognized text can be checked very simply for exactness or errors. When the user detects an error in the recognized text on the basis of an error detection in the speech recognition process carried out by the speech recognition device 35, the user can carry out a correction process by means of the error correction device 49 in that by means of the keyboard 14 of the error correction device 49 the user generates third digital data, which are applied to the correction device 50 of the error correction device 49. In addition, the second digital data representing the recognized text are applied to this correction device 50 via the bus 31 under control of the central control unit 32. In the correction device 50 of the error correction device 49 a part of the second digital data is replaced by the third digital data entered by means of the keyboard 14 in order to correct the recognized text. This partial replacement of the second digital data by the entered third digital data in the correction device 50 results in fourth digital data representing a corrected text. The fourth digital data representing the corrected text are transferred from the correction device 50 of the error correction device 49 to the third memory device 51, which stores the fourth digital data representing the corrected text, via the bus 31 as indicated by the broken line 65 under control of the central control unit 32. The stored fourth digital data are also transferred from the third memory device 51 to the display device 10 via the bus 31 as indicated by the broken line 66 under control of the central control unit 32, so that the corrected text is now displayed by the display means 47 of the display device 10. This concludes the actual speech recognition process carried out by means of the system 30.

The system 30 in accordance with Figure 3 now also adapts the reference data, stored in the reference data memory device 45 of the reference data device 39, in accordance with the method described with reference to Figure 2 in order to adapt these reference data to the relevant speaker, because this provides an improved recognition quality in a new speech recognition process of a further text uttered by a speaker already known to the system.

To adapt the reference data stored in the reference data memory device 45 of the reference data device 39 the system 30 shown in Figure 3 advantageously requires hardly any additional means because this adaptation in principle only utilizes adaptation means 67, which are available anyway. In the system 30 these adaptation means 67 are formed in a particularly simple manner by the speech recognition device 35, the lexicon data device 37 and the language model data device 38. With the aid of these adaptation means 67, upon reception of the fourth digital data representing the corrected text and stored in the third memory device 51, the fourth digital data are applied to the lexicon data device 37 and the language model data device 38 in the system 30 under control of the central control unit 32 as indicated by the broken lines 68 and 69. In the lexicon data device 37 the applied fourth digital data are processed by means of the first data processing unit 40 and subsequently the lexicon data stored and thus available in the lexicon data memory device 42 are adapted to the speaker of the text on the basis of the fourth digital data, resulting in adapted lexicon data which are stored in the lexicon data memory device 41. In the language model data device 38 the applied fourth digital data are processed by means of the second data processing unit 42 and the language model data stored and thus available in the language model data device 43 are adapted to the speaker of the spoken text by means of the second data processing unit 42 on the basis of the fourth digital data, resulting in adapted language model data which are stored in the language model data memory device 43.

After this adaptation process of the lexicon data and the language model data the first digital data representing the spoken text and stored in the first memory device 34 are again applied to the speech recognition device 35 via the bus 31 under control of the central control unit 32, as is indicated by the broken line 57. In the speech recognition device 35 the first digital data are again subjected to a speech recognition process. In this speech recognition process allowance is made for the adapted lexicon data stored in the lexicon data memory device 41 and applied to the speech recognition device 35 via the bus 31 under control of the central control unit 32, as is indicated by the broken lines 58, and the adapted language model data stored in the language model data memory device 43 and applied to the speech recognition device 35 via the bus 31 under control of the central control unit 32, as is indicated by the broken lines 59. In this case allowance is also made for the still non-adapted reference data stored in the reference data device 45 and applied to the speech recognition device 35 via the bus 31 under control of the central control unit 32, as indicated by the broken line 60. In the repeated speech recognition process the speech recognition device 35 generates fifth digital data representing a newly recognized text. The fifth digital data are applied from the speech recognition device 35 to the fourth memory device 52 and loaded into the fourth memory device 52 via the bus 31 under control of the central control unit 32, as indicated by the broken line 70.

In the system as shown in Figure 3 the fifth digital data stored in the fourth memory device 52 and representing the newly recognized text are used as adaptation data for adapting the reference data stored in the reference data memory device 45 of the reference data device 39. In order to achieve an adaptation of the reference data stored in the reference data memory device 45, the fifth digital data stored in the fourth memory device 52 are transferred to the reference data device 39 via the bus 31 under control of the central control unit 32, as indicated by the broken line 71. For this purpose the first digital data stored in the first memory device 34 are also applied to the reference data device 39 via the bus 31 under control of the central control unit 32, as indicated by the broken line 72. The fifth digital data, applied to the reference data device 39, forming the adaptation data and representing the newly recognized text, and the first digital data, applied to the reference data device 39 and representing the spoken text, are processed in the third data processing unit 44 of the reference data device 39, processing being effected essentially so as to derive new representations of phonemes from the spoken text using the newly recognized text. After this process has been carried out the third data processing unit 44 adapts the reference data stored in the reference data memory device 45 to the speaker of this text with the aid of the previously derived representations of phonemes. As a result of this adaptation the reference data, i.e. the reference patterns for the various phonemes, are better adapted to a speaker, which leads to a better recognition quality during a subsequent speech recognition process of a spoken text subsequently uttered by this speaker.

With the system 30 as shown in Figure 3 it is possible to print at option the spoken text, the recognized text, the corrected text and the newly recognized text by means of the printing device 53. For this purpose, the first digital data stored in the first memory device 34 and representing the spoken text, the second digital data stored in the second memory device 36 and representing the recognized text, the fourth digital data stored in the third memory device 51 and representing the corrected text, and the fifth digital data stored in the fourth memory device 52 and representing the newly recognized text can be applied selectively to the printing device 53 via the bus 31 under control of the central control unit 32. The applied data are processed by means of the printer control device 54 of the printing device 53, after which the relevant text is printed by means of the printer 55 of the printing device 53.

In the system 30 implemented by means of a personal computer and shown in Figure 3 the speech recognition device 35, the first data processing unit 40 of the lexicon data device 37, the second data processing unit 42 of the language model data device 38, the third data processing unit 44 of the reference data device 39, the display driver 46 of the display device 10, the correction device 50 of the error correction device 49, and the printer control device 54 of the printing device 53 are realized by means of the central processing unit (CPU) of the personal computer.

The system 30 as shown in Figure 3 comprises several memory devices, i.e. the first memory device 34, the second memory device 36, the third memory device 51, the fourth memory device 52, the lexicon data memory device 41, the language model data memory device 43, and the reference data memory device 45. Each of these memory devices is realized by means of the main memory and the associated fixed-disk storage, i.e. the hard disk, of the personal computer.

As is apparent from the foregoing description of the method in accordance with the invention and of the system in accordance with the invention, it is achieved through the measures in accordance with the invention that the adaptation means for the generation of the adaptation data by means of which the reference data available in the reference data device can be adapted to a spoken text and thus to a speaker of a spoken text, are constituted by means which are available anyway, i.e. by the speech recognition device, the lexicon data device and the language model data device, so that no separate means are required, which is advantageous for an as simple as possible and low-cost implementation. Another advantage is that the adaptation of the reference data to a speaker of a spoken text is effected with the aid of the data representing the newly recognized text and forming the adaptation data, which is because in the case of a newly recognized text it may be assumed that most of the newly recognized text very well matches with the spoken text and, as a consequence, the adaptation of the reference data on the basis of the data representing the newly recognized text and the data representing the spoken text can be effected particularly rapidly and effectively. Drawings:
Fig. 1
   lexicon; language model; references
AID conversion; spoken text; speech recognition; recognized text; correction; corrected text D/A conversion; display; display
   verification; adaptation data
Fig. 2
   lexicon; language model; references
   newly recognized text
A/D conversion; spoken text; speech recognition; recognized text; correction; corrected text D/A conversion; display; display

## Claims

1. A method of recognizing a spoken text,
in which method the spoken text uttered by a speaker is converted into first digital data and in which method the first digital data which represent the spoken text, are subjected to a speech recognition process,
in which process allowance is made for available lexicon data which represent a lexicon, available language model data which represent a language model, and available reference data which represent phonemes, and
in which process second digital data which represent a recognized text are generated,
and in which method the recognized text is displayed with the aid of the second digital data, and in which method third digital data are generated to correct the recognized text represented by the second digital data and a part of the second digital data are replaced by the third digital data and by this fourth digital data which represent a corrected text are obtained, and
in which method adaptation data for adapting the available reference data to the speaker of the spoken text are generated with the aid of the first digital data and the fourth digital data, and in which method the available reference data are adapted to the speaker of the spoken text with the aid of the adaptation data and the first digital data so as to obtain adapted reference data,
**characterized in that**
both the available lexicon data and the available language model data are adapted to the speaker of the spoken text by means of the fourth digital data after obtaining of the fourth digital data which represent the corrected text, and
subsequently the first digital data which represent the spoken text are again subjected to a speech recognition process in which allowance is made for the adapted lexicon data, the adapted language model data and the available reference data, and in which fifth digital data which represent a newly recognized text are generated, and
the fifth digital data are used as adaptation data and are used in conjunction with the first digital data in order to adapt the available reference data to the speaker of the spoken text.

2. A system for recognizing a spoken text,
comprising a conversion device (2) by means of which the spoken text uttered by a speaker can be converted into first digital data which represent the spoken text (3), and
comprising a lexicon data device (5) for available lexicon data which represent a lexicon and which can be stored in the lexicon data device, and
comprising a language model data device (6) for available language model data which represent a language model and which can be stored in the language model data device, and comprising a reference data device (7) for available reference data which represent phonemes and which can be stored in the reference data device, and
comprising a speech recognition device (4),
with which the lexicon data device (5), the language model data device (6) and the reference data device (7) can be made to cooperate, and
to which the first digital data can be applied and
which is adapted to supply second digital data which represent a recognized text (8) and which are generated during a speech recognition process carried out on the basis of the first digital data (3), and
comprising a display device (10) to which the second digital data can be applied in order to display the recognized text, and
comprising an error correction device (13) by means of which, for the correction of the text represented by the second digital data, third digital data can be entered and a part of the second digital data can be replaced by the third digital data, thereby enabling fourth digital data, which represent a corrected text (15), to be generated,
and comprising adaptation means to which the first digital data and the fourth digital data can be applied and by means of which adaptation data for adapting the available reference data to the speaker of the spoken text can be generated, which adaptation data and first digital data can be applied to the reference data device (7) to adapt the available reference data to the speaker of the spoken text and the reference data adapted to the speaker of the spoken text can be stored in the reference data device,
**characterized in that**
the adaptation means are formed by the speech recognition device (4), the lexicon data device (5) and the language model data device (6), and
the fourth digital data (15) can be applied to the lexicon data device (5) and the language model data device (6) to adapt the available lexicon data and the available language model data to the speaker of the spoken text, and
by means of the speech recognition device (4) fifth digital data (28) which represent a newly recognized text can be generated during a new speech recognition process carried out on the basis of the first digital data after the adaptation of the lexicon data and the language model data, and
the fifth digital data, used as adaptation data, together with the first digital data can be applied to the reference data device in order to adapt the available reference data to the speaker of the spoken text.

3. A system as claimed in Claim 2, **characterized in that** the system is implemented by means of a personal computer.

## Patentansprüche

1. Verfahren zum Erkennen eines gesprochenen Textes,
in welchem Verfahren der von einem Sprecher gesprochene Text in erste digitale Daten umgesetzt wird und in welchem Verfahren die den gesprochenen Text repräsentierenden ersten digitalen Daten einem Spracherkennungsvorgang unterworfen werden,
bei welchem Vorgang vorhandene Lexikondaten, die ein Lexikon repräsentieren, vorhandene Sprachmodelldaten, die ein Sprachmodell repräsentieren, und vorhandene Referenzdaten, die Phoneme repräsentieren, berücksichtigt werden und
bei welchem Vorgang einen erkannten Text repräsentierende zweite digitale Daten erzeugt werden,
und in welchem Verfahren unter Verwendung der zweiten digitalen Daten der erkannte Text angezeigt wird
und in welchem Verfahren zum Korrigieren des durch die zweiten digitalen Daten repräsentierten erkannten Textes dritte digitale Daten erzeugt werden und ein Teil der zweiten digitalen Daten durch die dritten digitalen Daten ersetzt wird und hierdurch vierte digitale Daten erhalten werden, die einen korrigierten Text repräsentieren, und
in welchem Verfahren unter Verwendung der ersten digitalen Daten und der vierten digitalen Daten Adaptionsdaten zum Anpassen der vorhandenen Referenzdaten an den Sprecher des gesprochenen Textes erzeugt werden,
und in welchem Verfahren unter Verwendung der Adaptionsdaten und der ersten digitalen Daten die vorhandenen Referenzdaten an den Sprecher des gesprochenen Textes angepaßt werden, so daß angepaßte Referenzdaten erhalten werden,
**dadurch gekennzeichnet,**
**daß** nach dem Erhalten der den korrigierten Text repräsentierenden vierten digitalen Daten sowohl die vorhandenen Lexikondaten als auch die vorhandenen Sprachmodelldaten anhand der vierten digitalen Daten an den Sprecher des gesprochenen Textes angepaßt werden und
danach die den gesprochenen Text repräsentierenden ersten digitalen Daten erneut einem Spracherkennungsvorgang unterworfen werden, bei dem die angepaßten Lexikondaten, die angepaßten Sprachmodelldaten und die vorhandenen Referenzdaten berücksichtigt werden und bei dem einen neuerlich erkannten Text repräsentierende fünfte digitale Daten erzeugt werden, und
die fünften digitalen Daten als Adaptionsdaten verwendet werden und gemeinsam mit den ersten digitalen Daten zum Anpassen der vorhandenen Referenzdaten an den Sprecher des gesprochenen Textes herangezogen werden.

2. System zum Erkennen eines gesprochenen Textes
mit einer Umsetzeinrichtung (2), mit der der von einem Sprecher gesprochene Text in erste digitale Daten umsetzbar ist, die den gesprochenen Text (3) repräsentieren, und
mit einer Lexikondateneinrichtung (5) für vorhandene Lexikondaten, die ein Lexikon repräsentieren und die in der Lexikondateneinrichtung gespeichert werden können, und
mit einer Sprachmodelldateneinrichtung (6) für vorhandene Sprachmodelldaten, die ein Sprachmodell repräsentieren und die in der Sprachmodelldateneinrichtung gespeichert werden können und
mit einer Referenzdateneinrichtung (7) für vorhandene Referenzdaten, die Phoneme repräsentieren und die in der Referenzdateneinrichtung gespeichert werden können, und
mit einer Spracherkennungseinrichtung (4),
mit der die Lexikondateneinrichtung (5), die Sprachmodelldateneinrichtung (6) und die Referenzdateneinrichtung (7) in Wirkverbindung gebracht werden können, und
der die ersten digitalen Daten zugeführt werden können und
die zum Abgeben von bei einem anhand der ersten digitalen Daten (3) durchgeführten Spracherkennungsvorgang erzeugten zweiten digitalen Daten ausgebildet ist, die einen erkannten Text (8) repräsentieren, und
mit einer Anzeigeeinrichtung (10), der die zweiten digitalen Daten zum Anzeigen des erkannten Textes zugeführt werden können, und
mit einer Fehlerkorrektureinrichtung (13), mit der zum Korrigieren des durch die zweiten digitalen Daten repräsentierten erkannten Textes dritte digitale Daten eingegeben werden können und ein Teil der zweiten digitalen Daten durch die dritten digitalen Daten ersetzt werden kann, wodurch vierte digitale Daten erzeugt werden können, die einen korrigierten Text (15) repräsentieren,
und mit Adaptionsmitteln, denen die ersten digitalen Daten und die vierten digitalen Daten zugeführt werden können und mit denen Adaptionsdaten zum Anpassen der vorhandenen Referenzdaten an den Sprecher des gesprochenen Textes erzeugt werden können, wobei die Adaptionsdaten und die ersten digitalen Daten der Referenzdateneinrichtung (7) zum Anpassen der vorhandenen Referenzdaten an den Sprecher des gesprochenen Textes zugeführt werden können und die an den Sprecher des gesprochenen Textes angepaßten Referenzdaten in der Referenzdateneinrichtung gespeichert werden können,
**dadurch gekennzeichnet,**
**daß** die Adaptionsmittel durch die Spracherkennungseinrichtung (4), die Lexikondateneinrichtung (5) und die Sprachmodelldateneinrichtung (6) gebildet sind und
**daß** die vierten digitalen Daten (15) der Lexikondateneinrichtung (5) und der Sprachmodelldateneinrichtung (6) zum Anpassen der vorhandenen Lexikondaten und der vorhandenen Sprachmodelldaten an den Sprecher des gesprochenen Textes zugeführt werden können und
mit der Spracherkennungseinrichtung (4) bei einem nach dem Anpassen der Lexikondaten und der Sprachmodelldaten erneut anhand der ersten digitalen Daten durchgeführten Spracherkennungsvorgang fünfte digitale Daten (28) erzeugt werden können, die einen neuerlich erkannten Text repräsentieren, und
die fünften digitalen Daten als Adaptionsdaten gemeinsam mit den ersten digitalen Daten der Referenzdateneinrichtung zum Anpassen der vorhandenen Referenzdaten an den Sprecher des gesprochenen Textes zugeführt werden können.

3. System nach Anspruch 2, **dadurch gekennzeichnet, daß** das System mit Hilfe eines Personalcomputers realisiert ist.

## Revendications

1. Procédé de reconnaissance d'un texte parlé,
procédé dans lequel le texte parlé prononcé par un locuteur est converti en des premières données numériques et
procédé dans lequel les premières données numériques qui représentent le texte parlé sont soumises à un processus de reconnaissance vocale,
processus dans lequel il est tenu compte de données de lexique disponibles qui représentent un lexique, de données de modèle de langage disponibles qui représentent un modèle de langage et de données de référence disponibles qui représentent des phonèmes, et
processus dans lequel des deuxièmes données numériques qui représentent un texte reconnu sont produites,
et procédé dans lequel le texte reconnu est affiché à l'aide des deuxièmes données numériques,
et procédé dans lequel des troisièmes données numériques sont produites pour corriger le texte reconnu représenté par les deuxièmes données numériques et une partie des deuxièmes données numériques sont remplacées par les troisièmes données numériques et, de ce fait, des quatrièmes données numériques qui représentent un texte corrigé sont obtenues et
procédé dans lequel des données d'adaptation pour adapter les données de référence disponibles au locuteur du texte parlé sont produites à l'aide des premières données numériques et des quatrièmes données numériques,
et procédé dans lequel les données de référence disponibles sont adaptées au locuteur du texte parlé à l'aide des données d'adaptation et des premières données numériques de manière à obtenir des données de référence adaptées,
**caractérisé en ce que**
les données de lexique disponibles et les données de modèle de langage disponibles sont adaptées au locuteur du texte parlé au moyen des quatrièmes données numériques après obtention des quatrièmes données numériques qui représentent le texte corrigé, et
ensuite les premières données numériques qui représentent le texte parlé sont à nouveau soumises à un processus de reconnaissance vocale dans lequel il est tenu compte des données de lexique adaptées, des données de modèle de langage adaptées et des données de référence disponibles, et dans lequel des cinquièmes données numériques qui représentent un texte nouvellement reconnu sont produites, et
les cinquièmes données numériques sont utilisées comme données d'adaptation et sont utilisées en conjonction avec les premières données numériques afin d'adapter les données de référence disponibles au locuteur du texte parlé.

2. Système pour reconnaître un texte parlé,
comprenant un dispositif de conversion (2) au moyen duquel le texte parlé prononcé par un locuteur peut être converti en des premières données numériques qui représentent le texte parlé (3), et
comprenant un dispositif de données de lexique (5) pour des données de lexique disponibles qui représentent un lexique et qui peuvent être stockées dans le dispositif de données de lexique, et
comprenant un dispositif de données de modèle de langage (6) pour des données de modèle de langage disponibles qui représentent un modèle de langage et qui peuvent être stockées dans le dispositif de données de modèle de langage, et
comprenant un dispositif de données de référence (7) pour des données de référence disponibles qui représentent des phonèmes et qui peuvent être stockées dans le dispositif de données de référence, et
comprenant un dispositif de reconnaissance vocale (4),
avec lequel le dispositif de données de lexique (5), le dispositif de données de modèle de langage (6) et le dispositif de données de référence (7) peuvent coopérer, et
auquel les premières données numériques peuvent être appliquées et
qui est propre à fournir des deuxièmes données numériques qui représentent un texte reconnu (8) et qui sont produites durant un processus de reconnaissance vocale effectué sur la base des premières données numériques (3), et
comprenant un dispositif d'affichage (10) auquel les deuxièmes données numériques peuvent être appliquées afin d'afficher le texte reconnu, et
comprenant un dispositif de correction d'erreur (13) au moyen duquel, pour la correction du texte représenté par les deuxièmes données numériques, des troisièmes données numériques peuvent être entrées et une partie des deuxièmes données numériques peuvent être remplacées par les troisièmes données numériques, permettant de ce fait à des quatrièmes données numériques, qui représentent un texte corrigé (15), d'être produites,
et comprenant des moyens d'adaptation auxquels les premières données numériques et les quatrièmes données numériques peuvent être appliquées et au moyen desquels des données d'adaptation pour adapter les données de référence disponibles au locuteur du texte parlé peuvent être produites, lesquelles données d'adaptation et premières données numériques peuvent être appliquées au dispositif de données de référence (7) pour adapter les données de référence disponibles au locuteur du texte parlé et les données de référence adaptées au locuteur du texte parlé peuvent être stockées dans le dispositif de données de référence,
**caractérisé en ce que**
les moyens d'adaptation sont formés du dispositif de reconnaissance vocale (4), du dispositif de données de lexique (5) et du dispositif de données de modèle de langage (6), et les quatrièmes données numériques (15) peuvent être appliquées au dispositif de données de lexique (5) et au dispositif de données de modèle de langage (6) pour adapter les données de lexique disponibles et les données de modèle de langage disponibles au locuteur du texte parlé, et
au moyen du dispositif de reconnaissance vocale (4) des cinquièmes données numériques (28) qui représentent un texte nouvellement reconnu peuvent être produites durant un nouveau processus de reconnaissance vocale exécuté sur la base des premières données numériques après l'adaptation des données de lexique et des données de modèle de langage, et
les cinquièmes données numériques, utilisées comme données d'adaptation, ainsi que les premières données numériques peuvent être appliquées au dispositif de données de référence afin d'adapter les données de référence disponibles au locuteur du texte parlé.

3. Système suivant la revendication 2, **caractérisé en ce que** le système est mis en oeuvre au moyen d'un ordinateur personnel.
